# EUROPÄISCHE PATENTANMELDUNG

(11) **EP 1 426 807 A2**
(43) Veröffentlichungstag der Anmeldung: **09.06.2004**
(21) Anmeldenummer: 03027701.6
(22) Anmeldetag: 02.12.2003
(51) Int. Cl.: G02B 21/08, G02B 21/06

(54) **Mikroskop mit UV-Halbleiter-Lichtquelle**

(30) Priorität: 03.12.2002 DE 10256270
(71) Anmelder: Carl Zeiss SMS GmbH, 07745 Jena (DE)
(72) Erfinder: Engel, Thomas, 99102 Erfurt OT Niedernissa (DE)
(74) Vertreter: Hampe, Holger

(57) **Zusammenfassung**

Die Erfindung bezieht sich auf ein Mikroskop mit einer Beleuchtungseinrichtung für die UV-Mikroskopie.

Der Erfindung liegt die Aufgabe zugrunde, eine Beleuchtungsquelle für UV-Mikroskope zu schaffen, die mit geringerem technischen Aufwand herstellbar und weniger kostenintensiv ist, eine höhere Lebensdauer aufweist und bei der die Probenabbildung nicht in dem Maße wie bisher durch thermische Effekte beeinflußt wird.

Erfindungsgemäß ist in einem Mikroskop als Beleuchtungsquelle für die Probenbeleuchtung mindestens eine UV-Halbleiter-Lichtquelle vorgesehen.

Eine entsprechend ausgebildete Beleuchtungseinrichtung mit einer oder mehreren UV-Halbleiter-Lichtquellen kann im oder am Mikroskopstativ (1) untergebracht sein. In einer besonderen Ausgestaltungsvariante sind mehrere UV-LED's (12) in das Mikroskopobjektiv (7) integriert.

## Beschreibung

Die Erfindung bezieht sich auf ein Mikroskop mit einer Beleuchtungseinrichtung für die UV-Mikroskopie.

Aus dem Stand der Technik sind UV-Mikroskope bekannt. Üblicherweise werden als Lichtquellen bei der UV-Mikroskopie Xenon-Höchstdrucklampen, Quecksilber-Höchstdrucklampen oder Deuteriumlampen genutzt. Bekannt ist auch die Verwendung von Quecksilber-Xenon-Mischgasbrennern.

Diese UV-Lichtquellen arbeiten nach dem Prinzip der Gasentladung, sie geben ein nicht-kontinuierliches Spektrum ab. So erzeugt beispielsweise die Quecksilber-Höchstdrucklampe ein sehr helles Licht mit einem hohen UV-Anteil. Die für die UV-Mikroskopie benötigte Strahlung wird aus diesem Spektrum mit Bandpassfiltern und ggf. Wärmeschutzfiltern ausgefiltert.

Als Beleuchtungsquellen sind bisher also Systeme erforderlich, die im wesentlichen aus einem Brenner, einer zugehörigen Stromversorgungseinrichtung, einem Lampenhaus mit Justiereinrichtung, Kollektorspiegel, Kollektoroptik und Filtern bestehen.

Der Brenner umfaßt einen Quarzglaskolben hoher Druckfestigkeit, in dem zwei Elektroden, die Kathode und die Anode, eingeschmolzen sind. Im Brennraum ist Quecksilber enthalten. Mit Hochspannungsstößen wird zwischen den Elektroden ein elektrischer Lichtbogen gezündet und durch die Stromversorgung im brennenden Zustand gehalten. Aufgrund der dabei entstehenden Wärme verdampft Quecksilber zu Gas, wobei ein hoher Druck in dem Quarzglaskolben entsteht, unter dem das helle Licht abgestrahlt wird.

Abgesehen davon, daß derartige Beleuchtungssysteme aufgrund der hohen thermischen Belastung selbst nur eine geringe Lebensdauer haben, wird die UV-Mikroskopie durch thermische Effekte gestört, die von der Wärmeentwicklung der Beleuchtungsquelle herrühren.

Der technische Aufwand für diese aus einer Vielzahl von Komponenten bestehende Beleuchtungseinrichtungen ist verhältnismäßig hoch und dadurch auch mit hohen Kosten verbunden. Als weiterer Nachteil kommt hinzu, daß die Elektroden während des Betriebes der Beleuchtungseinrichtung nachjustiert werden müssen, um eine durch Änderung des Abstands zwischen den Elektroden verursachte Verschiebung des Lichtbogens zu vermeiden.

Davon ausgehend liegt der Erfindung die Aufgabe zugrunde, eine Beleuchtungsquelle für UV-Mikroskope bereitzustellen, die mit wesentlich geringerem technischen Aufwand herstellbar und weniger kostenintensiv ist, eine höhere Lebensdauer aufweist und bei der die Probenabbildung nicht in dem Maße wie bisher durch thermische Effekte beeinflußt wird.

Erfindungsgemäß ist vorgesehen, in einem Mikroskop als Lichtquelle für die Probenbeleuchtung mindestens eine UV-Halbleiter-Lichtquelle zu nutzen.

Mit der Nutzung von UV-Halbleiter-Lichtquellen ist der technische Aufwand weitestgehend verringert und die Wärmeentwicklung ist so weit reduziert, daß funktionswesentliche Mikroskop-Baugruppen aufgrund der geringeren thermischen Belastung eine wesentlich höhere Nutzungsdauer haben und die Mikroskopie nicht bzw. in wesentlich geringerem Maße durch thermische Effekte gestört wird.

Vorteilhaft ist die UV-Halbleiter-Lichtquelle mit einer Ansteuerschaltung für die Betriebsweisen "Pulsbetrieb" oder "kontinuierlicher Betrieb" verbunden. Dabei kann die Ansteuerschaltung zum Umschalten auf die eine oder die andere Betriebsweise ausgebildet sein.

Der Pulsbetrieb ist besonders dann vorteilhaft, wenn das Mikroskop mit einer Videokamera gekoppelt ist. Die Pulsrate sollte dabei der Bildwiederholrate dieser Kamera angepaßt sein.

Als UV-Halbleiter-Lichtquellen können alternativ oder auch kombiniert UV-LED's (ligth-emitting-diode), Superlumineszenz-Dioden oder UV-Laserlichtquellen vorgesehen sein.

In der Praxis bewährt hat sich die Verwendung einer UV-LED des Typs NSHU 590 E. Eine solche Diode kann problemlos anund ausgeschaltet werden, so daß die Verwendung eines Shutters zur zeitweisen Strahlsperrung entfallen kann. Ein weiterer Vorteil des gepulsten Betriebes besteht darin, daß die UV-LED mit einer höheren Leistung im Vergleich zur Nennleistung bei Dauerbetrieb genutzt werden kann und insofern eine verhältnismäßig hohe Strahlungsintensität bezogen auf die Baugröße erzielt werden kann.

Die Verwendung von UV-LED's hat des weiteren den wesentlichen Vorteil, daß die Emissionswellenlänge auf eine verhältnismäßig geringe Bandbreite begrenzt ist und deshalb auch die Anwendung von Bandpaßfiltern zur weiteren Begrenzung des zur Abbildung genutzten Spektrums entfallen kann oder auch eine Filterung mit wesentlich vereinfachten Filtersystemen erreicht werden kann.

In einer besonders vorteilhaften Ausgestaltung ist der UV-Halbleiter-Lichtquelle in Abstrahlungsrichtung eine Kollimatoroptik vorgeordnet. Dabei können beispielsweise eine UV-LED und die Kollimatoroptik in einer gemeinsamen Haltevorrichtung untergebracht sein, wobei sich auf diese Weise eine kompakte Baueinheit ergibt.

Es ist denkbar, daß in der Baueinheit mehrere UV-Halbleiter-Lichtquellen, sondern insbesondere mehrere UV-LED's untergebracht und dabei radialsymmetrisch um die optische Achse des Beleuchtungsstrahlenganges angeordnet sind.

Es kann vorgesehen sein, eine solche Baueinheit mit einer oder mehreren UV-LED's als Beleuchtungseinrichtung im Mikroskopstativ unterzubringen oder auch über eine entsprechende Kupplung, beispielsweise eine Steckverbindung, außen an das Mikroskopstativ so anzusetzen, daß das Beleuchtungslicht in den Mikroskopstrahlengang eingekoppelt wird. Bei moderneren Mikroskopbauweisen, die über kein Stativ im klassischen Sinne verfügen, kann die Beleuchtungseinrichtung mit UV-LED selbstverständlich an geeigneter Stelle anderer Mikroskopbaugruppen angeordnet sein.

In einer weiteren Ausgestaltungsvariante der Erfindung kann vorgesehen sein, daß mindestens eine UV-LED am oder im Mikroskopobjektiv vorhanden ist, wobei in Arbeitsstellung sowohl die optische Achse des Mikroskopobjektivs als auch das von der UV-LED ausgehende UV-Licht auf eine Probe gerichtet sind.

Dabei ist es denkbar, daß eine oder mehrere UV-LED gemeinsam mit einer Kollimatoroptik in einem Gehäuse untergebracht und dieses an eine Außenfläche des Mikroskopobjektivs geklemmt oder geschraubt ist.

Es ist sowohl möglich, daß das UV-Licht zunächst durch eine Lichteintrittsöffnung in das Innere des Mikroskopobjektivs gerichtet und dort über einen teildurchlässigen Spiegel auf die Probe gelenkt wird oder das UV-Licht außerhalb des Mikroskopobjektivs auf die Probenoberfläche gerichtet ist.

Eine besonders bevorzugte Ausgestaltung besteht jedoch darin, daß mehrere UV-LED's in das Innere des Mikroskopobjektivs integriert und dort radialsymmetrisch zur optischen Achse angeordnet sind, wobei die Lichtabstrahlung auf das Gesichtsfeld des Mikroskopobjektivs auf der Probe erfolgt.

Im Rahmen der Erfindung liegt es weiterhin, daß neben einer oder mehreren UV-Halbleiter-Lichtquellen mindestens eine Lichtquelle für den visuellen Spektralbereich und/oder mindestens eine Lichtquelle für den infraroten Spektralbereich vorhanden ist.

Dabei kann es sich bevorzugt um VIS-LED's bzw. um IR-LED's handeln, die am Mikroskopstativ, an anderweitigen Mikroskopbaugruppen oder am Mikroskopobjektiv angeordnet bzw. in das Mikroskopobjektiv integriert sind. In diesem Falle verfügt das Mikroskop über eine entsprechend ausgebildete Ansteuerschaltung, über die je nach gewünschter Betriebsweise des Mikroskops die abwechselnde oder gleichzeitige Inbetriebnahme der vorhandenen Halbleiter-Lichtquellen, deren Helligkeitregelung oder auch deren Ansteuerung für Pulsoder kontinuierlichen Betrieb veranlaßt werden kann.

Denkbar ist es weiterhin, daß mindestens eine der im oder am Mikroskop vorhandenen Halbleiter-Lichtquellen mit einer Einrichtung zur Verstellung ihrer Position und Ausrichtung in mindestens einer der Koordinaten X,Y,Z,θ,ϕ gekoppelt ist. Mit der Verstellung läßt sich eine gezielte Beeinflussung der Intensität und der Ausrichtung des Beleuchtungsfeldes auf der Probe erreichen.

In besonderen Ausführungen des erfindungsgemäßen Mikroskops kann vorgesehen sein, daß eine oder mehrere der vorhandenen UV-Halbleiter-Lichtquellen bzw. auch der zusätzlich vorhandenen Lichtquellen für den visuellen Spektralbereich oder infraroten Spektralbereich auf einer Wechseleinrichtung, etwa einem Wechselrad oder Wechselschieber, angeordnet sind und ihre Positionen je nach Bedarf verändert wird, um das entsprechende Licht in den Beleuchtungsstrahlengang einzukoppeln.

Dabei kann die Wechseleinrichtung so ausgebildet sein, daß durch entsprechendes Betätigen des Wechselrades oder Wechselschiebers wahlweise LED's bestimmter Wellenlängen im UV-, VIS- oder IR-Bereich eingeschwenkt werden können.

Denkbar ist es weiterhin auch, auf einer solchen Wecheleinrichtung sowohl UV-Halbleiter-Lichtquellen als auch klassische UV-Strahler unterzubringen und bei Bedarf gegeneinander auszutauschen.

Die Erfindung soll nachfolgend anhand von Ausführungsbeispielen näher erläutert werden. Die zugehörigen Zeichnungen zeigen in
- Fig.1: die Andeutung eines Mikroskopstativs mit angekoppelter Beleuchtungseinrichtung, in der mehrere UV-LED's vorhanden sind;
- Fig.2: ein Mikroskopobjektiv mit integrierten UV-LED's in einer ersten Ausgestaltungsvariante;
- Fig.3: ein Mikroskopobjektiv mit integrierten UV-LED's in einer zweiten Ausgestaltungsvariante.

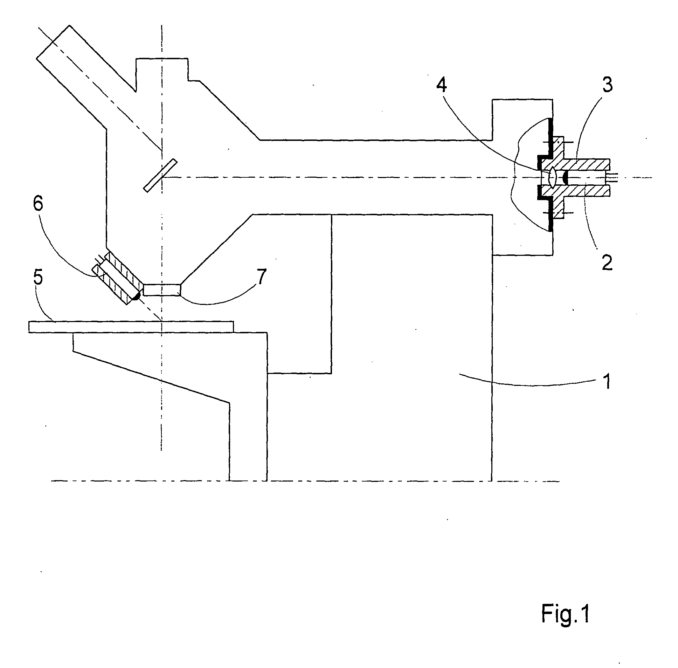

In Fig.1 ist ein Mikroskopstativ 1 dargestellt, das in einer herkömmlichen Weise aufgebaut ist. Anstelle der bei der UV-Mikroskopie bisher üblichen Beleuchtungsquellen ist jedoch eine UV-LED 2, beispielhaft des Typs NSHU 590 E, vorgesehen.

Die UV-LED 2 ist von einer Halterung 3 umschlossen, die über eine Schraub-, Steck-, Klebe- oder anderweitige Verbindung mit dem Mikroskopstativ 1 verbunden ist. Die Halterung 3 umfaßt weiterhin eine Kollimatoroptik 4 zur Bündelung der von der UV-LED 2 ausgehenden und zur Beleuchtung einer Probe 5 vorgesehenen UV-Strahlung.

Mit der Verwendung einer UV-Halbleiter-Lichtquelle, insbesondere der UV-LED 2, ergeben sich für die UV-Mikroskopie die bereits weiter oben ausführlich beschriebenen Vorteile.

Alternativ zu der dargestellten Anordnung einer einzigen UV-LED 2 kann vorgesehen sein, mehrerer solcher UV-LED's in die Halterung zu integrieren, so daß eine höhere Strahlungsintensität bei der Beleuchtung der Probe erzielt wird.

Das von den UV-LED's ausgehende Licht sollte mit einer entsprechend gestalteten Kollimatoroptik gebündelt werden.

Wie in Fig.1 weiterhin gezeigt ist es denkbar, zusätzlich oder auch alternativ zu der Beleuchtungseinrichtung am Mikroskopstativ 1 eine oder auch mehrere UV-LED's 6 in der Nähe des Mikroskopobjektivs 7 anzuordnen. Dabei trifft das von diesen UV-LED's 6 ausgehende, außerhalb des Mikroskopstativs 1 geführte UV-Licht im Bilderfassungsbereich des Mikroskopobjektivs 7 auf die Oberfläche der Probe 5. Auch hierbei kann die Lichtintensität durch Variation der Anzahl der UV-LED's 6 beeinflußt werden.

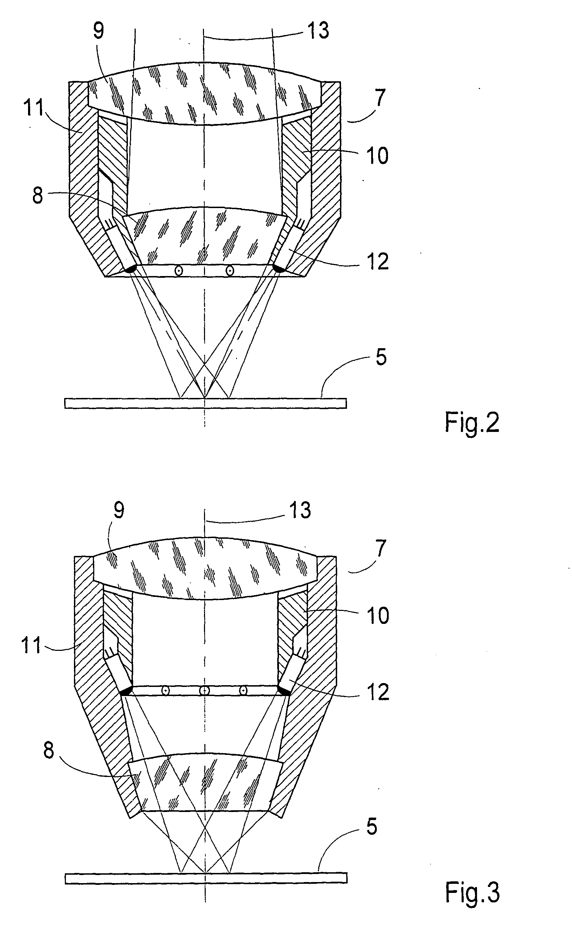

Ein besonders bevorzugtes Ausführungsbeispiel ist in Fig.2 dargestellt. Fig.2 zeigt den schematischen Aufbau des Mikroskopobjektivs 7 mit einem aus Linsen 8 und 9 gebildeten optischen Abbildungssystem. Die Linsen 8 und 9 sind in Halterungen 10 und 11 gefaßt. Der Bilderfassungsbereich des Mikroskopobjektivs 7 ist auf die Oberfläche der Probe 5 gerichtet.

Erfindungsgemäß sind in das Mikroskopobjektiv 7 beispielhaft sechs UV-LED's 12 integriert, die, wie hier gezeigt, in den Halterungen 10 und 11 aufgenommen und fixiert sind. Die UV-LED's 12 sind dabei radialsymmetrisch um die optische Achse 13 des Mikroskopobjektivs 7 verteilt, wobei die Abstrahlrichtung jeweils auf die Oberfläche der Probe 5 gerichtet ist.

Ein weiteres Ausführungsbeispiel ist in Fig.3 dargestellt. Hier sind ebenfalls wie in dem vorhergehenden Ausführungsbeispiel UV-LED's 14 in das Mikroskopobjektiv 7 integriert, wobei jedoch die Integration in das Mikroskopobjektiv 7 zwischen die Linsen 8 und 9 erfolgt ist.

Dargestellt ist hier eine Variante, bei der acht UV-LED's 14 radialsymmetrisch zur optischen Achse 13 positioniert sind, wobei diese UV-LED's 14 bezüglich ihrer Abstrahlrichtung so positioniert sind, daß das UV-Licht durch die Linse 8 hindurch auf die Oberfläche der Probe 5 trifft.

Der Vollständigkeit halber sei darauf hingewiesen, daß die Erfindung nicht auf die Positionierung, die Anzahl, die Typenauswahl und die Leistung der hier beispielhaft dargestellten UV-Halbleiter-Lichtquellen beschränkt ist.

### Bezugszeichenliste

- 1: Mikroskopstativ
- 2: UV-LED
- 3: Halterung
- 4: Kollimatoroptik
- 5: Probe
- 6: UV-LED's
- 7: Mikroskopobjektiv
- 8, 9: Linsen
- 10, 11: Halterungen
- 12: UV-LED's
- 13: optische Achse
- 14: UV-LED's

## Patentansprüche

1. Mikroskop, bei dem als Beleuchtungsquelle zur Probenbeleuchtung mindestens eine UV-Halbleiter-Lichtquelle vorgesehen ist.

2. Mikroskop nach Anspruch 1, **dadurch gekennzeichnet, daß** eine oder mehrere UV-Halbleiter-Lichtquellen gemeinsam mit einer in Abstrahlrichtung vorgeordneten Kollimatoroptik (4) in einer Beleuchtungseinheit untergebracht und die Beleuchtungseinheit mit dem Mikroskopstativ (1) verbunden ist.

3. Mikroskop nach Anspruch 1 oder 2, **dadurch gekennzeichnet, daß** mindestens eine UV-Halbleiter-Lichtquelle an oder in dem Mikroskopobjektiv (7) positioniert ist, wobei in Arbeitsstellung sowohl die optische Achse (13) des Mikroskopobjektivs (7) als auch die von der UV-Halbleiter-Lichtquelle ausgehende UV-Strahlung auf eine Probe (5) gerichtet sind.

4. Mikroskop nach einem der vorgenannten Ansprüche, **dadurch gekennzeichnet, daß** mindestens eine UV-Halbleiter-Lichtquelle am Mikroskopobjektiv (7) angeordnet ist, wobei das Objektivgehäuse eine Lichteintrittsöffnung aufweist und die UV-Strahlung durch die Lichteintrittsöffnung in das Mikroskopobjektiv (7) eingestrahlt und innerhalb des Mikroskopobjektivs (7) in den Mikroskopstrahlengang eingeblendet wird.

5. Mikroskop nach Anspruch 4, **dadurch gekennzeichnet, daß** mehrere UV-Halbleiter-Lichtquellen radialsymmetrisch um die optische Achse (13) des Mikroskopobjektivs (7) positioniert sind.

6. Mikroskop nach einem der vorgenannten Ansprüche, **dadurch gekennzeichnet, daß** mindestens eine UV-Halbleiter-Lichtquelle im Innern des Mikroskopobjektivs (7) positioniert und ihre Abstrahlrichtung durch mindestens eine Abbildungslinse (8) des Mikroskopobjektivs (7) hindurch auf die Probe (5) gerichtet ist.

7. Mikroskop nach einem der vorgenannten Ansprüche, **dadurch gekennzeichnet, daß** eine Ansteuerschaltung zum Betreiben der UV-Halbleiter-Lichtquelle im Pulsbetrieb oder im kontinuierlichen Betrieb vorhanden und die Ansteuerschaltung zum Ein-/Ausschalten und/oder zur Helligkeitsregelung der UV-Halbleiter-Lichtquelle ausgebildet ist.

8. Mikroskop nach Anspruch 7, **dadurch gekennzeichnet, daß** die Pulsrate beim Betreiben der UV-Halbleiter-Lichtquelle im Pulsbetrieb der Bildwiederholrate einer mit dem Mikroskop gekoppelten Kamera, bevorzugt einer Videokamera, entspricht oder ein Vielfaches dieser Bildwiederholrate ist.

9. Mikroskop nach einem der vorgenannten Ansprüche, **dadurch gekennzeichnet, daß** als UV-Halbleiter-Lichtquellen UV-LED's (light emitting diode), Superlumineszenz-Dioden oder UV-Laser-Lichtquellen vorgesehen sind.

10. Mikroskop nach Anspruch 9, **dadurch gekennzeichnet, daß** UV-LED's (2,6,12,14) des Typs NSHU 590 E vorgesehen sind.

11. Mikroskop nach einem der vorgenannten Ansprüche, **dadurch gekennzeichnet, daß** neben einer oder mehreren UV-Halbleiter-Lichtquellen mindestens eine Halbleiter-Lichtquelle für den visuellen Spektralbereich, bevorzugt VIS-LED's, und/oder mindestens eine Halbleiter-Lichtquelle für den infraroten Spektralbereich, bevorzugt IR-LED's, am Mikroskopstativ oder am Mikroskopobjektiv angeordnet bzw. in das Mikroskopobjektiv integriert und mit einer entsprechend ausgebildeten Ansteuerschaltung verknüpft sind, über die je nach Betriebsweise des Mikroskops die abwechselnde oder gleichzeitige Inbetriebnahme der vorhandenen Halbleiter-Lichtquellen deren Helligkeitregelung bzw. deren Ansteuerung für Puls- oder kontinuierlichen Betrieb veranlaßt wird.

12. Mikroskop nach einem der vorgenannten Ansprüche, **dadurch gekennzeichnet, daß** mindestens eine der vorhandenen Halbleiter-Lichtquellen mit einer Einrichtung zur Verstellung ihrer Position und Ausrichtung in mindestens einer der Koordinaten X,Y,Z,θ,ϕ gekoppelt ist, wobei mit der Verstellung eine Beeinflussung der Intensität und der Ausrichtung des Beleuchtungsfeldes auf der Probe erfolgt.

13. Mikroskop nach einem der vorgenannten Ansprüche, **dadurch gekennzeichnet, daß** eine oder mehrere UV-Lichtquellen und/oder zusätzlich vorhandene Lichtquellen für den visuellen oder infraroten Spektralbereich auf einer Wechseleinrichtung, bevorzugt einem Wechselrad, angeordnet sind, wobei deren Strahlung durch Verschwenken der Wechseleinrichtung wahlweise in den Beleuchtungsstrahlengang eingekoppelt wird.

14. Mikroskop nach Anspruch 13, **dadurch gekennzeichnet, daß** auf der Wechseleinrichtung sowohl UV-Halbleiter-Lichtquellen als auch klassische UV-Strahler, wie Quecksilber-Xenon-Mischgasbrenner, angeordnet und zur wahlweisen Einkopplung ihrer Strahlung in den Beleuchtungsstrahlengang vorgesehen sind.
